(19) Europäisches Patentamt
European Patent Office
Office européen des brevets

(11) Veröffentlichungsnummer: **0 009 546**
**B1**

(12) **EUROPÄISCHE PATENTSCHRIFT**

(45) Veröffentlichungstag der Patentschrift: **08.04.81**

(51) Int. Cl.³: **B 27 K 3/15, C 08 C 19/36**

(21) Anmeldenummer: **79102332.8**

(22) Anmeldetag: **09.07.79**

(54) **Wässriges Behandlungsmittel für Holz und Holzwerkstoffe.**

(30) Priorität: **07.09.78 DE 2838930**

(43) Veröffentlichungstag der Anmeldung:
**16.04.80 Patentblatt 80/8**

(45) Bekanntmachung des Hinweises auf die Patenterteilung:
**08.04.81 Patentblatt 81/14**

(84) Benannte Vertragsstaaten:
**AT CH FR GB IT SE**

(56) Entgegenhaltungen:
**DE - A - 2 616 591**
**DE - A - 2 732 736**
**DE - A - 2 734 413**
**FR - A - 2 163 488**
**GB - A - 1 156 619**
**US - A - 3 551 193**
**US - A - 3 661 874**

(73) Patentinhaber: **CHEMISCHE WERKE HÜLS AG**
**Postfach 1320**
**D-4370 Marl 1 (DE)**

(72) Erfinder: **Gorke, Klaus, Dr.**
**Am Mühlenberg 14**
**D-4358 Haltern 3 (DE)**
Erfinder: **Bartz, Wilfried, Dr.**
**Am Alten Sportplatz 17 a**
**D-4370 Marl (DE)**

Anmerkung: Innerhalb von neun Monaten nach der Bekanntmachung des Hinweises auf die Erteilung des europäischen Patents im Europäischen Patentblatt kann jedermann beim Europäischen Patentamt gegen das erteilte europäische Patent Einspruch einlegen. Der Einspruch ist schriftlich einzureichen und zu begründen. Er gilt erst als eingelegt, wenn die Einspruchsgebühr entrichtet worden ist (Art. 99(1) Europäisches Patentübereinkommen).

Courier Press, Leamington Spa, England.

EP 0 009 546 B1

Wäßriges Behandlungsmittel für Holz und Holzwerkstoffe

Holz und Holzwerkstoffe sind weitverbreitete Konstruktionsmaterialien. Aufgrund ihres chemischen Aufbaus und ihrer Struktur besitzen sie jedoch gewisse naturgegebene Nachteile. So sind sie einmal ständig der Gefahr ausgesetzt, von Pilzen, Bakterien oder Insekten befallen zu werden. Zum anderen können starke Schwankungen im Feuchtigkeitsgehalt auftreten, die die Dimensionsstabilität negativ beeinflussen und schlimmstenfalls zu Rissen führen. Schließlich bereitet die leichte Brennbarkeit nicht unerhebliche sicherheitstechnische Probleme.

Um die aufgezeigten Nachteile mehr oder weniger zu beseitigen, ist es schon seit geraumer Zeit üblich, Holz und Holzwerkstoffe mit den verschiedensten Mitteln nach einer Vielzahl von Verfahren vor oder nach der Bearbeitung zu behandeln. Heute ist es sogar bei vielen Einsatzgebieten erforderlich, in Normen festgelegte Vorschriften zu erfüllen. Dabei ist es erstrebenswert, daß man die an den Werkstoff gestellten Anforderungen mit einfachen, wirtschaftlichen und umweltfreundlichen Maßnahmen erreicht und daß die einmal erzielte Wirkung möglichst lange vorhält, um kostspielige Nachbehandlungen zu vermeiden.

Besonders bei Holz und Holzwerkstoffen, die der Freibewitterung und/oder großer Feuchtigkeit ausgesetzt sind, konnten die angestrebten Ziele in ihrer Gesamtheit bisher nicht realisiert werden. Die heute vorzugsweise praktizierten Behandlungsmethoden des Holzschutzes stellen sich wie folgt dar:

1) Einbringen auswasch- und diffusionsfester Holzschutzmittel aus wäßriger Lösung. Nach dieser Methode wird besonders in Tränkverfahren in der Regel eine gute, dauerhafte Imprägnierung der Randzonen erreicht. Nicht imprägniert sind dagegen die inneren Zonen dickerer Werkstücke. Außerdem vermag diese Methode nicht zu verhindern, daß als Folge starker Feuchtigkeitsschwankungen Risse auftreten, wobei zum Teil ungeschützte Bereiche entstehen, da alle Wirkstoffe in der Randzone fixiert sind. Diesen Mangel hat man dadurch versucht zu beheben, daß man gegebenenfalls neben den fixierbaren Schutzmitteln gleichzeitig nicht fixierbare und damit diffusionsfähig bleibende, wasserlösliche Wirkstoffe verwendet. Beim Auftreten von Rissen ist jedoch auch dieser Schutz nicht dauerhaft, da die nicht fixierten Wirkstoffe durch Witterungseinflüsse ausgewaschen werden. Will man einen länger anhaltenden Schutz erreichen, so ist eine zusätzliche Oberflächenbehandlung durch Aufbringung einer organischen Beschichtung erforderlich.

2) Einbringen nicht oder wenig wasserlöslicher Holzschutzmittel aus organischen Lösemitteln. Die Diffusionsfähigkeit dieser Wirkstoffe in Holz nicht zu hoher Feuchtigkeit ist gut, jedoch vermag auch diese Methode Rißbildung nicht zu verhindern. Zudem weisen einige dieser oft hoch-toxischen Schutzmittel einen merklichen Dampfdruck auf. Aus diesen Gründen ist auch hier eine zusätzliche Behandlung mit einem organischen Überzugsmittel empfehlenswert.

Ein ganz wesentlicher Nachteil dieser Methode ist die Verwendung organischer, brennbarer, z.T. gesundheitsschädlicher Lösemittel.

Die bei den beiden Methoden des Standes der Technik angesprochene zusätzliche Behandlung der imprägnierten Werkstücke mit einem organischen Überzugsmittel erfolgt in der Regel in einem separaten Arbeitsgang. Es sind jedoch bereits Versuche unternommen worden, diesen zusätzlichen Behandlungsschritt einzusparen durch die Verwendung bindemittelhaltiger Holzschutzmittel. Dabei wurden als Bindemittel für die wäßrige Applikation Kunststoffdispersionen und für das Applizieren aus organischen Lösemitteln Alkydharze und verwandte Systeme bevorzugt. Nachteilig ist in beiden Fällen das geringe Penetrationsvermögen der organischen Bindemittel. Bei den lösemittelhaltigen Holzschutzsystemen muß zudem der Bindemittelgehalt sehr niedrig gehalten werden, da andernfalls das Eindringen der schützenden Wirkstoffe erschwert wird. Dieser Umstand macht eine Mehrfachbehandlung bis zur Erzielung ausreichender Filmdicken erforderlich, so daß diese Arbeitsweise keine wirtschaftlichen Vorteile gegenüber einer nachträglichen Beschichtung bringt.

Das Eindringvermögen bei Verwendung wäßriger Kunststoffdispersionen ist noch geringer als bei lösemittelhaltigen Systemen. Dementsprechend ist die erzielbare holzschützende Wirkung durchweg mäßig.

Die den wäßrigen Imprägniermitteln zugesetzten aktiven Wirkstoffe dienen deshalb mehr der Konservierung des noch nicht verarbeiteten Überzugsmittels als dem Schutze des damit behandelten Substrats. Eine Regulierung der Feuchtigkeitsaufnahme und -abgabe des Holzes ist fast nicht vorhanden.

Neben Behandlungsmitteln auf Kunststoffdispersionsbasis sind wasserverdünnbare Alkydharzemulsionen, alkydharzhaltige Kunststoffdispersionen und wasserverdünnbare Alkydharze bekannt. Die für die wasserverdünnbaren Lasuren auf Kunststoffdispersionsbasis angeführten Merkmale gelten im wesentlichen auch für diese Typen. Vor der Behandlung von Nadelhölzern ist eine Grundierung mit einem amtlich anerkannten holzschützenden Grundiermittel empfehlenswert bzw. erforderlich.

Aufgabe der vorliegenden Erfindung war es, ein wäßriges Behandlungsmittel für Holz und Holzwerkstoffe bereitzustellen, das ein oxidative trocknendes, mit Säuren löslich gemachtes, organisches Bindemittel enthält, ein gutes Penetrationsvermögen besitzt und gegebenenfalls zusammen mit wasserlöslichen, insektizid und/oder fungizid wirkenden Zusatzstoffen einen dauerhaften Holzschutz gewährleistet.

Diese Aufgabe wurde dadurch gelöst, daß man ein Behandlungsmittel verwendet, das als organisches Bindemittel ein Aminogruppen tragendes, niedermolekulares 1,3-Butadienpolymerisat enthält, wobei

1. das Bindemittel einen Doppelbindungsgehalt entsprechend einer Jodzahl von mindestens 200 [g Jod/100 g] aufweist, wovon ein Doppelbindungsgehalt von mindestens 100, gemessen als Jodzahl [g Jod/100 g], auf cis-1,4-Strukturelemente des 1,3-Butadienpolymerisats entfällt,
2. der Gehalt an Aminogruppen mindestens 50 mg-Atom Stickstoff/100 g Bindemittel beträgt,
3. das Basispolymer für das Aminogruppen tragende 1,3-Butadienpolymerisat mindestens 70 Molprozent Butadieneinheiten sowie ein Molgewicht ($\overline{M}n$) von 500 bis 6 000 hat.

Unter Holzwerkstoffen werden im Rahmen dieser Erfindung solche Werkstoffe verstanden, die noch weitgehend das typische Eigenschaftsbild des Holzes aufweisen. Hierzu gehören z.B. Tischlerplatten und Sperrholz.

Als Basispolymere zur Herstellung der organischen Bindemittel für die erfindungsgemäßen Behandlungsmittel werden Homo- und Copolymerisate des 1,3-Butadiens verwendet. Als Comonomere kommen in erster Linie andere konjugierte Diolefine, wie 1,3-Pentadien, 1,3-Diene der homologen Reihe und Isopren infrage. Ferner können noch in untergeordneten Mengen Monoolefine, wie Ethylen, Propylen oder aromatische Vinylverbindungen, wie z.B. Styrol, als Comonomere eingesetzt werden.

Die Butadienpolymerisate müssen mindestens 70 Molprozent, vorzugsweise sollen sie mindestens 90 Molprozent Butadieneinheiten enthalten. Besonders geeignet für die erfindungsgemäßen Behandlungsmittel sind Bindemittel, die als Basis Homopolybutadien enthalten. Die bevorzugten Molgewichte liegen im Bereich von 500 bis 3 000. Die Molgewichte werden dampfdruckosmometrisch bestimmt. Derartige Polymerisate können nach bekannten Verfahren des Standes der Technik hergestellt werden, z.B. nach den Verfahren der DE—PSS 11 86 631, 12 12 302, 12 41 119, 12 51 537 und 12 92 853 sowie dem Verfahren der DE—OS 23 61 782.

Die Einführung von Aminogruppen in die niedermolekularen 1,3-Butadienpolymerisate kann nach verschiedenen bekannten Methoden erfolgen.

So führt ein bevorzugter Weg (I) über die Anlagerung von $\alpha$,ß-ungesättigten Dicarbonsäuren oder deren Anhydrid und anschließender Umsetzung der Additionsprodukte mit primärtertiären Diaminen zu Amino-dicarbonsäureimid-addukten.

Ein besonders bevorzugter Weg (II) führt über die Epoxidierung der 1,3-Butadienpolymerisate und Umsetzung der Epoxide mit primären und/oder sekundären aliphatischen Aminen.

Die 1,3-Butadienpolymerisate können bei beiden angeführten Verfahren entweder direkt, so wie sie bei der Herstellung anfallen, für die weiteren Umsetzungen gemäß den Wegen I und II verwendet werden oder aber vorher mit Hilfe bekannter Maßnahmen, wie beispielsweise partielle Hydrierung, Isomerisierung bzw Cyclisierung modifiziert werden.

Nähere Einzelheiten zu der Einführung von Aminogruppen in die niedermolekularen 1,3-Butadienpolymerisate nach den Wegen I und II sind beispielsweise den DE—OSS 26 16 591, 27 28 470, 27 34 413 und 27 32 736.2 zu entnehmen.

Wesentlich zur Erreichung des Zieles dieser Erfindung ist es, daß die zur Zubereitung des erfindungsgemäßen Behandlungsmittels als Bindemittel verwendeten, Aminogruppen tragenden, niedermolekularen 1,3-Butadienpolymerisate einen Doppelbindungsgehalt entsprechend einer Jodzahl von mindestens 200, vorzugsweise von mindestens 250 [g Jod/100 g] aufweisen.

Von dem vorhandenen Doppelbindungsgehalt muß ein bestimmter Anteil entsprechend einer Jodzahl von mindestens 100, vorzugsweise von mindestens 150 [g Jod/100 g], auf cis-1,4-Strukturelemente des 1,3-Butadienpolymerisats entfallen.

Um den Aminogruppen tragenden, niedermolekularen 1,3-Butadienpolymerisaten nach der Umsetzung mit Säuren eine genügende Wasserlöslichkeit oder -dispergierbarkeit zu verleihen, ist ein Gehalt an Aminogruppen von mindestens 50 mg-Atom Stickstoff/100 g Bindemittel nötig. Bevorzugt ist ein solcher von 100 bis 400, ganz besonders bevorzugt von 120 bis 300 mg-Atom Stickstoff/100 g Bindemittel. Mit steigendem Aminogruppengehalt nehmen die Löslichkeit der mit Säuren neutralisierten Bindemittel und die Stabilität der wäßrigen Bindemittellösung zu. Löslichkeit und Stabilität können auch dadurch verbessert werden, daß man Aminogruppen einführt, die hydrophile Substituenten tragen.

Aus der Vielzahl der Bindemittel, die sich für das erfindungsgemäße Behandlungsmittel eignen, sind folgende bevorzugt:

Nach Weg I hergestellte Bindemittel, die durch Umsetzung eines

a) Adduktes aus 18 bis 25 Gewichtsprozent Maleinsäureanhydrid und 82 bis 75 Gewichtsprozent eines Polybutadiens mit Molgewicht ($\overline{M}n$) zwischen 800 und 2 000, einer Jodzahl von $\geq$ 350 [g Jod/100 g] und einem cis-1,4-Gehalt von $\geq$ 70% der vorhandenen Doppelbindungen, mit
b) einem 1,3-Diaminopropan der Formel

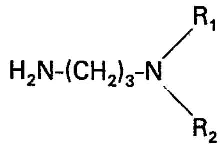 I,

worin $R_1$ und $R_2$ unabhängig voneinander einen Alkylrest mit bis zu 4 Kohlenstoffatomen oder gemeinsam $-(CH_2)_5-$oder$-(CH_2)_2-O-(CH_2)_2-$bedeuten, d.h. Bestandteile eines Ringes sind, erhalten werden.

Ein Teil des 1,3-Diaminopropans kann durch ein Amin der allgemeinen Formel $R_3-NH_2$, mit $R_3$ gleich H oder Alkylrest mit bis zu 4 Kohlenstoffatomen, ersetzt werden, sofern sichergestellt ist, daß im Bindemittel ein Gehalt an Aminogruppen entsprechend mindestens 120 mg-Atom Stickstoff/100 g enthalten sind.

Besonders bevorzugt sind die nach Weg II hergestellten Bindemittel, die erhalten werden durch Umsetzung von

a) epoxidiertem Polybutadien mit einem nach DIN 16 945 bestimmten Epoxidgehalt von 5 bis 8 Gewichtsprozent Saurestoff, das hergestellt worden ist aus einem Polybutadien mit einem Molgewicht ($\bar{M}n$) von 1 000 bis 2 500, einer Jodzahl von $\geq$ 350 g Jod/100 g] und einem cis-1,4-Gehalt von $\geq$ 70% der vorhandenen Doppelbindungen, mit

b) einem oder mehreren Aminen der allgemeinen Formeln $R_4-NH_2$, II, und

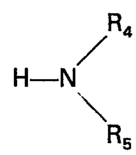 , III,

wobei $R_4$ und $R_5$ unabhängig voneinander einen Alkylrest mit bis zu 4 Kohlenstoffatomen, einen Hydroxialkylrest mit 2 bis 4 Kohlenstoffatomen oder in der Formel III gemeinsam $-(CH_2)_5-$oder$-(CH_2)_2-O-(CH_2)_2-$bedeuten, d.h. Bestandteile eines Ringes sind. Besonders günstig wirkt sich die Verwendung oder Mitverwendung von 1,3-Diaminopropanen der Formel I aus. Der Gehalt an Aminogruppen im Endprodukt soll mindestens 120 mg-Atom Stickstoff/100 g betragen.

Die so erhaltenen Additionsprodukte werden durch Neutralisation bzw. Teilneutralisation mit sauren Verbindungen in die wasserlösliche bzw. wasserdispergierbare Salzform übergeführt. Als saure Verbindungen können hierfür anorganische Säuren, wie beispielsweise Schwefelsäure, Salzsäure, Borsäure oder Phosphorsäure oder aber allein bzw. im Gemisch damit organische Säuren, wie Ameisensäure, Essigsäure, Propionsäure, Buttersäure, Milchsäure o. ä. eingesetzt werden.

Um eine hinreichende Löslichkeit bzw. Dispergierbarkeit der Bindemittel in Wasser zu erreichen, muß die zugegebene Säuremenge genügend hoch gewählt werden. Je höher die Konzentration der Aminogruppen in den als Bindemittel verwendeten Additionsverbindungen ist, desto geringere Neutralisationsgrade können zur Erreichung des gewünschten Effektes eingesetzt werden. In der Regel liegt die erforderliche Mindestmenge an Säure bei 0,3 bis 0,5 Äquivalente Säure/Äquivalent Aminogruppe. Mit steigender Säuremenge steigt die Stabilität der wäßrigen Bindemittellösung, was sich z.B. durch eine verbesserte Verträglichkeit gegenüber Elektrolytzusätzen und durch eine erhöhte Penetrationsfähigkeit zu erkennen gibt.

So kann es unter Umständen zweckmäßig sein, 5 und mehr Äquivalente Säure/Äquivalent Aminogruppe einzusetzen. Gerade in diesen Fällen ist es dann auch zweckmäßig, zumindest teilweise solche Säuren einzusetzen, die bekanntermaßen eine holzschützende Wirkung zeigen, wie z.B. Borsäure und Phosphorsäure. Die pH-Werte der wäßrigen Behandlungsmittel liegen je nach chemischer Natur der eingesetzten Binde- und Zusatzmittel sowie entsprechend der verwendeten Säure zwischen 2 und 8.

Die mit Säuren umgesetzten Bindemittel sind mit Wasser unbegrenzt mischbar. Die Praxis hat jedoch gezeigt, daß der Zusatz gewisser Mengen organischer Lösemittel vor oder nach Zugabe der Säure zum Bindemittel die Herstellung des Behandlungsmittels erleichtert und dessen Stabilität erhöht. Diese Maßnahmen sind dem Fachmann grundsätzlich bekannt. Für den genannten Zweck können organische Lösungsmittel wie Isopropanol, Butanole, Diacetonalkohol, Alkylzellosolven und Dimethylether von Glykolen eingesetzt werden. Diese Lösemittel werden in Mengen von bis zu 100 Gewichtsteilen, vorzugsweise 5 bis 50 Gewichtsteilen und insbesondere in Mengen von 10 bis 40 Gewichtsteilen, bezogen auf 100 Gewichtsteile Bindemittel, eingesetzt.

Da die in den erfindungsgemäßen Behandlungsmitteln eingesetzten Bindemittel oxidativ trocknende Eingenschaften besitzen, ist es üblicherweise nicht erforderlich, daß ihnen weitere Harze als Vernetzungsmittel zugesetzt werden müssen. Selbstverständlich können weitere Bindemittel, welche — gegebenenfalls bei Wärmebehandlung — als Vernetzungsmittel wirken, wie beispielsweise wasserlösliche bzw. -dispergierbare Aminoplaste oder Phenolharze mitverwendet werden, sofern der im Sinne

der Aufgabenstellung der vorliegenden Erfindung angestrebte Effekt nicht wesentlich beeinträchtigt wird.

Daneben können die erfindungsgemäßen Behandlungsmittel weitere übliche Zusatzstoffe, wie Pigmente, Stabilisatoren, Sikkative, oberflächenaktive Substanzen, Viskositätsregulatoren und insbesondere solche Zusätze enthalten, die als Holzschutzmittel bekannt sind. Hierunter sind in erster Linie wasserlösliche, insektizid und/oder fungizid wirkende Holzschutzmittel, wie Alkalifluoride, Alkaliarsenate, Silicofluoride, Hydrogenfluoride, anorganische Borverbindungen (Borsäure, Borate) und Schwermetallsalze des Bleis, Cadmiums, Nickels, Cobalts, Mangans, Kupfers, Quecksilbers und Zinks zu verstehen. Beim Zusatz von Chromaten muß von Fall zu Fall die Verträglichkeit geprüft werden.

Die Zusatzstoffe können in den praxisüblichen Mengen zugesetzt werden. Sie richten sich auch nach dem jeweiligen zu behandelnden Werkstoff, dessen Verwendungszweck sowie dem Imprägnierverfahren und sind durch einige orientierende Versuche leicht zu ermitteln.

Die erfindungsgemäßen Behandlungsmittel haben im allgemeinen einen Bindemittelgehalt von 1 bis 30 Gewichtsprozent, vorzugsweise 5 bis 15 Gewichtsprozent, und können nach allen bekannten Verfahren (vgl. DIN 68 800, Blatt 3) des Standes der Technik appliziert werden. Dabei ist die erzielbare Schutzwirkung — wie dem Fachmann bekannt ist — eng mit dem Behandlungsverfahren verknüpft.

Die Anmeldung wird anhand der nachfolgenden Beispiele erläutert:

## Beispiele

*A. Basispolymere*

Für die Herstellung der erfindungsgemäßen Behandlungsmittel werden zwei verschiedene Basispolymere eingesetzt:

a) Homopolybutadien (Jodzahl n. Wijs: 445; 1,4-cis : 1,4-trans : Vinyl = 73 : 25 : 2 ; Molgewicht: 1 700; Viskosität (20°C) : ~800 mPa·s),

b) Homopolybutadien (Jodzahl: 435; 1,4-cis : 1,4-trans : Vinyl = 48 : 13 : 39; Molgewicht: 1 300; Viskosität (20°C) n. Brookfield: ~940 mPa·s).

*B. Herstellung Aminogruppen tragender 1,3-Butadienpolymerisate — im folgenden kurz Aminoaddukte gennant*

a) nach Weg I:

### Beispiel 1

1 300 g des Basispolymeren a) und 275,8 g Maleinsäureanhydrid (MSA) werden in Gegenwart von 1,5 ml Acetylaceton und 1,6 g eines handelsüblichen Antioxidans (DPPD) unter Stickstoff 1 Stunde bei 180°C und anschließend 3 Stunden bei 190°C umgesetzt. Das MSA—Addukt enthält ≤0.1 Gewichtsprozent freies MSA und weist eine Säurezahl von 177 mg KOH/g (titriert in Pyridin/Wasser) auf. Zu 600 g dieses MSA—Adduktes werden in einem Rührkolben mit Rückflußkühler unter Rühren und unter Stickstoff bei 120 bis 130°C 107,9 g N,N-Dimethyl-1,3-propylendiamin innerhalb von 5 Stunden zugetropft. Nach 2 weiteren Stunden bei dieser Temperatur wird die Temperatur auf 150°C gesteigert. Nach 5 Stunden bei 150°C wird auf 180°C aufgeheizt, und es werden unter Durchleiten von Stickstoff durch die Schmelze die flüchtigen Bestandteile abgretrieben. Das so erhaltene Aminoaddukt 1 weist eine Säurezahl von < 3 mg KOH/g und einen Gehalt an Aminogruppen entsprechend 130 mg-Atom Stickstoff/100 g auf. Nach Zugabe von 11 g 50gewichtsprozentiger Essigsäure zu 100 g einer 90gewichtsprozentigen Lösung des Aminoaddukts 1 in Isopropanol ist die Mischung unbegrenzt mit Wasser verdünnbar.

### Beispiel 2

Unter den Reaktionsbedingungen von Beispiel 1 werden 820 g des Basispolymeren a) mit 180 g MSA umgesetzt (1 ml Acetylaceton; 1 g DPPD). Das erhaltene MSA—Addukt wird in 500 g Isopropanol gelöst und nach Zugabe von 113 g N,N-Dimethyl-1,3-propylen-diamin 5 Stunden bei 180°C im Autoklaven umgesetzt. Nach dem Abkühlen auf Raumtemperatur werden 50 ml flüssiges $NH_3$ in den Autoklaven gedrückt und noch einmal für 5 Stunden auf 180°C erhitzt. Der Autoklavaustrag wird bei 2 mbar und 100°C bis zur Gewichtskonstanz eingeengt. Das Aminoaddukt 2 besitzt eine Säurezahl von 3 mg KOH/g, einen Gesamtstickstoffgehalt von 3,8 Gewichtsprozent und einen Aminogruppengehalt enstprechend 98 mg-Atom Stickstoff/100 g. Eine 80gewichtsprozentige Lösung des Aminoadduktes 2 in Butylglykol läßt sich nach Zugabe von 9 g 50gewichtsprozentiger Essigsäure pro 100 g Lösung unbegrenzt mit Wasser verdünnen.

b) nach Weg II:

### Epoxidierung

20,0 kg des Homopolybutadiens a) werden in 60,0 kg $HCCl_3$ gelöst und zum Sieden erhitzt. Eine Mischung von 5,0 kg 60%igem $H_2O_2$ und 0,9 kg Ameisensäure wird innerhalb von 90 min zugetropft, danach hält man weitere 5 Stunden am Sieden. Nach dem Abkühlen wird die organische Phase bei

20°C mit Wasser gewaschen, bis sie frei von Säure und $H_2O_2$ ist. Die Hauptmenge des Wassers wird im Scheidetrichter abgetrennt, den Restgehalt entfernt man bei der Destillation des Chloroforms. Nach dem Abziehen des Chloroforms im Vakuum erhält man 20,2 kg eines klaren, farblosen, epoxidierten Butadienpolymerisats mit einer Viskosität (20°C) von 2,9 Pa·s Ausbeute: 94%.

Das so erhaltene epoxidierte 1,3-Butadienpolymerisat wird mit I bezeichnet. Die mit II bis IV bezeichneten Produkte werden analog obiger Vorschrift hergestellt. Das Basispolymere b) wurde zur Herstellung von III verwendet.

Für die Herstellung der Aminoaddukte 3 bis 7 werden epoxidierte 1,3-Butadienpolymerisate eingesetzt, die folgende Eigenschaften besitzen:

| Epoxidiertes 1,3-Butadienpolymerisat | Epoxidsauerstoff (% Sauerstoff, n. DIN 16 945) | Jodzahl * |
|---|---|---|
| I | 4,78 | 314 |
| II | 7,23 | 258 |
| III | 4,60 | 302 |
| IV | 5,59 | 296 |

* Umgerechnete Maßzahl; Doppelbindungen werden IR-spektroskopisch bestimmt.

## Beispiel 3

300 g epoxidiertes 1,3-Butadienpolymerisat I werden unter Stickstoff mit 46,5 g Diethanolamin gemischt und unter Rühren bei 190°C umgesetzt. Nach 6 Stunden ist das Amin praktisch quantitative umgesetzt. Das Produkt enthält 129 mg-Atom Stickstoff/100 g Addukt und 2,05 Gewichtsprozent Restepoxidsauerstoff.

## Beispiel 4

300 g epoxidiertes 1,3-Butadienpolymerisat II werden analog Beispiel 3 mit 70,7 g Diethanolamin in Gegenwart von 0,2 Gewichtsprozent Cu-naphthenat bei 190°C quantitative umgesetzt. Nach 4,5 Stunden erhält man ein Produkt mit 183 mg-Atom Stickstoff/100 g Addukt und 2,92 Gewichtsprozent Restepoxidsauerstoff.

## Beispiel 5

800 g epoxidiertes 1,3-Butadienpolymerisat III werden analog Beispiel 3 mit 118 g Diethanolamin bei 190°C quantitativ umgesetzt. Nach 5 Stunden erhält man ein Produkt mit 122 mg-Atom Stickstoff/100 g Addukt und 2,0 Gewichtsprozent Restepoxidsauerstoff. Die Aminoaddukte 3 bis 5 werden 80gewichtsprozentig in Isopropanol gelöst. Nach Zugabe von 70 Äquivalentprozent Essigsäure, bezogen auf den Aminogruppengehalt, sind alle Lösungen unbegrenzt mit Wasser verdünnbar.

## Beispiel 6

1 200 g epoxidiertes 1,3-Butadienpolymerisat IV und 158 g Monoethanolamin werden 6 Stunden bei 160°C und anschließend 3 Stunden bei 190°C unter Stickstoff umgesetzt. Man erhält ein Addukt mit einem Aminogruppengehalt von entsprechend 186 mg-Atom Stickstoff/100 g und mit 1,64 Gewichtsprozent Restepoxidsauerstoff. Das Aminoaddukt 6 wird mit Isopropanol auf 70 Gewichtsprozent Feststoff verdünnt, mit 200 Äquivalentprozent Essigsäure (bezogen auf den Aminogruppengehalt) versetzt und dann mit Wasser auf einen Feststoffgehalt von 10 Gewichtsprozent verdünnt. Der pH-Wert der Lösung beträgt 4,0.

In diese Lösung können z.B. 4,5 Gewichtsprozent Borsäure ($H_3BO_3$) bzw. 1,5 Gewichtsprozent Kaliumhydrogenfluorid, bezogen auf das wäßrige Behandlungsmittel, eingebracht werden, ohne daß das Bindemittel koaguliert. Die Verträglichkeit gegenüber Kupfersulfat ($CuSO_4 \cdot 5H_2O$) liegt unter 1 Gewichtsprozent.

## Beispiel 7

1 268,5 g epoxidiertes 1,3-Butadienpolymerisat IV und 163,4 g N,N-Dimethyl-1,3-propylendiamin werden unter Stickstoff langsam auf 180°C aufgeheizt. Nach 5 Stunden bei 180°C

werden 166,1 g Diethanolamin zugefügt, und es wird auf 200°C erhitzt. Nach 8 Stunden bei 200°C wird noch während 2 weiterer Stunden bei 200°C Stickstoff durch die Schmelze geleitet, um flüchtige Bestandteile zu entfernen. Das so erhaltene Aminoaddukt 7 weist einen Aminogruppengehalt entsprechend 298 mg-Atom Stickstoff/100 g und 0,2 Gewichtsprozent Restepoxidsauerstoff auf.

Analog Beispiel 6 wird aus dem Aminoaddukt 7 eine 10gewichtsprozentige Lösung hergestellt. Der pH-Wert beträgt 4,1.

In diese Lösung lassen sich z.B. 5 Gewichtsprozent $H_3BO_3$, 5 Gewichtsprozent $CuSO_4 \cdot 5H_2O$ bzw. 10 Gewichtsprozent $KHF_2$ einrühren, ohne daß das Bindemittel koaguliert.

*C. Imprägnierversuche*

Die in Biespiel 7 hergestellte 10gewichtsprozentige Lösung des Aminoadduktes 7 wird im folgenden als Behandlungsmittel 1 bezeichnet. Durch Auflösen von 4 Gewichtsteilen $H_3BO_3$ und 5 Gewichtsteilen $CuSO_4 \cdot 5H_2O$ in 91 Gewichtsteilen des Behandlungsmittels 1 wird ein wasserlösliche Holzschutzmittel enthaltendes Behandlungsmittel 2 hergestellt. Zum Vergleich wird durch Auflösen von 4 Gewichtsteilen $H_3BO_3$ und 5 Gewichtsteilen $CuSO_4 \cdot 5H_2O$ in 91 Gewichtsteilen Wasser das Behandlungsmittel A bereitet. In diese Behandlungsmittel werden bei Raumtemperatur Fichtenholzklötzchen (ca. 19 × 15 × 65 mm) gelegt, die 10 Gewichtsprozent Feuchtigkeit enthalten (bestimmt als Gewichtsverlust durch 3 stündiges Trocknen bei 130°C).

Nach 1, 2 und 4 Stunden werden den verschiedenen Behandlungsbädern Klötzchen entnommen. Ihre oberflächliche Feuchtigkeit wird mit Filterpapier entfernt. Anschließend wird die Gewichtszunahme bestimmt. Die ermittelten Werte (%) sind in Spalte 3 der folgenden Tabelle eingetragen. Danach werden die imprägnierten Klötzchen 3 Stunden bei 130°C getrocknet und erneut gewogen. Die prozentuale Gewichtszunahme der Klötzchen, bezogen jeweils auf den getrockneten Zustand, ist in Spalte 4 eingetragen. In Spalte 5 ist vermerkt, wieviel % der aufgenommenen Behandlungsmittelmenge nach dem Trocknen im Holz verbleiben.

Zur Verdeutlichung sind die Berechnungen im folgenden aufgelistet:

Spalte 3: $$\frac{I - G}{G} \cdot 100 \text{ ("Naßaufnahme")}$$

Spalte 4: $$\frac{W - T}{T} \cdot 100 \text{ ("Trockenaufnahme")}$$

Spalte 5: $$\frac{W - T}{I - G} \cdot 100 \text{ ("Relative Trockenaufnahme")}$$

mit G = Gewicht des Holzes, unbehandelt, ohne Trocknung

T = Gewicht des Holzes, unbehandelt, getrocknet

I = Gewicht des Holzes, imprägniert, ohne Trocknung

W = Gewicht des Holzes, imprägniert, getrocknet

Wie aus der Tabelle zu ersehen ist, entspricht die relative Trockenaufnahme (Spalte 5) für das Behandlungsmittel 1 sehr gut dessen Bindemittelgehalt. Zum anderen wird das Eindringvermögen der erfindungsgemäßen Behandlungsmittel durch die Anwesenheit des Bindemittels keineswegs vermindert, sondern gesteigert. Das gleiche gilt für das Eindringvermögen der anorganischen Holzschutzmittel, die den erfindungsgemäßen Behandlungsmitteln zugesetzt sind.

TABELLE: Imprägnierversuche

| Behandlungs-mittel | Imprägnier-zeit (h) | Naßaufnahme (%) | Trockenaufnahme (%) | Relative Trocken-aufnahme (%) |
|---|---|---|---|---|
| 1 | 1 | 35,1 | 4,1 | 10,4 |
| | 2 | 35,8 | 3,7 | 9,3 |
| | 4 | 43,1 | 4,5 | 9,5 |
| 2 | 1 | 35,3 | 5,5 | 14,1 |
| | 2 | 41,9 | 6,4 | 13,9 |
| | 4 | 62,4 | 10,1 | 14,6 |
| A | 1 | 32,3 | 1,2 | 3,5 |
| | 2 | 34,7 | 1,7 | 4,4 |
| | 4 | 42,1 | 1,7 | 3,7 |

**Patentansprüche**

1. Wäßriges Behandlungsmittel für Holz und Holzwerkstoffe, enthaltend ein oxidativ trocknendes, mit Säuren löslich gemachtes, organisches Bindemittel und gegebenenfalls übliche Zusatzstoffe,
dadurch gekennzeichnet,
daß es als organisches Bindemittel ein Aminogruppen tragendes, niedermolekulares 1,3-Butadienpolymerisat enthält, wobei
1) das Bindemittel einen Doppelbindungsgehalt entsprechend einer Jodzahl von mindestens 200 [g Jod/100 g] aufweist, wovon ein Doppelbindungsgehalt von mindestens 100, gemessen als Jodzahl [g Jod/100 g], auf cis-1,4-Strukturelemente des 1,3-Butadienpolymerisats entfällt,
2) der Gehalt an Aminogruppen mindestens 50 mg-Atom Stickstoff/100 g Bindemittel beträgt,
3) das Basispolymer für das Aminogruppen tragende 1,3-Butadienpolymerisat mindestens 70 Molprozent Butadieneinheiten sowie ein Molgewicht ($\bar{M}n$) von 500 bis 6 000 hat.
2. Wäßriges Behandlungsmittel nach Anspruch 1,
dadurch gekennzeichnet,
daß es als Zusatzstoff wasserlösliche, insektizid und/oder fungizid wirkende Holzschutzmittel enthält.

**Claims**

1. An aqueous agent for the treatment of wood and wood materials, containing an organic binder drying by oxidation and solubilized by the addition of acids as well as containing standard additives, as the case may be,
characterized in that it contains an amino group-carrying, low-molecular 1,3-butadiene polymerizate as organic binder, wherein
1) the binder has a double bond-content corresponding to an iodine number of at least 200 [g iodine/100 g], the cis-1,4-structural elements of the 1,3-butadiene polymerizate having a double bond-content of at least 100, measured as iodine number [g iodine/100 g],
2) the amino group-content amounts to at least 50 mg-atom nitrogen/100 g binder,
3) the base polymer for the amino group-carrying 1,3-butadiene polymerizate has at least 70 percent by mole butadiene units as well as a molecular weight ($\bar{M}n$) of 500 to 6,000.
2. An aqueous agent according to claim 1,
characterized in that it contains as additive water-soluble wood preservatives acting as insecticide and/or fungicide.

**Revendications**

1. Agent de traitement aqueux destiné ou bois et aux matériaux en bois, contenant un solvant organique séchant par oxydation, rendu soluble avec des acides, et le cas échéant des adjuvants usuels, charactérisé par le fait qu'
il contient un polymère de butadiène-1,3 de faible poids moléculaire portant des groupes amines comme liant organique, où

1) le liant présente une teneur en doubles liaisons correspondant à un indice d'iode d'au moins 200 [g d'iode/100 g], dont une teneur en doubles liaisons d'au moins 100, mesurée par l'indice d'iode [g d'iode/100 g], est à imputer à des éléments structuraux 1,4 cis provenant du polymère de butadiène-1,3,

2) la teneur en groupes amines s'établit à 50 mg-atomes au moins d'azote/100 g de liant,

3) le polymère de base utilisé pour le polymère de butadiène-1,3 portant des groupes amines a au moins 70% en mole d'élément de butadiène et une masse moléculaire ($\overline{M}n$) de 500—6000.

2. Agent de traitement aqueux selon revendication 1
caractérisé par le fait qu'
il contient, comme adjuvant, des agents de protection du bois, solubles dans l'eau, ayant un effect insecticide et/ou fongicide.